# EUROPÄISCHE PATENTSCHRIFT

(11) **EP 3 194 197 B1**
(45) Veröffentlichungstag und Bekanntmachung des Hinweises auf die Patenterteilung: **14.06.2023**
(21) Anmeldenummer: 15749762.9
(22) Anmeldetag: 03.08.2015
(51) Int. Cl.: B60K 37/06, B60K 35/00, G05G 1/08, G05G 1/02

(54) **ANZEIGE- UND BEDIENVORRICHTUNG, INSBESONDERE FÜR EIN KRAFTFAHRZEUG, BEDIENELEMENT UND KRAFTFAHRZEUG**
DISPLAY AND OPERATING DEVICE, ESPECIALLY FOR A MOTOR VEHICLE, OPERATING ELEMENT, AND MOTOR VEHICLE
DISPOSITIF D'AFFICHAGE ET DE COMMANDE, NOTAMMENT POUR UN VÉHICULE À MOTEUR, ÉLÉMENT DE COMMANDE ET VÉHICULE À MOTEUR

(30) Priorität: 16.09.2014 DE 102014218493
(43) Veröffentlichungstag der Anmeldung: 26.07.2017
(73) Patentinhaber: Bayerische Motoren Werke Aktiengesellschaft, 80809 München (DE)
(72) Erfinder: RÖLLE, Christopher, 82194 Gröbenzell (DE); RÜMELIN, Sonja, 81667 München (DE)
(86) Internationale Anmeldenummer: PCT/EP2015/067831
(87) Internationale Veröffentlichungsnummer: WO 2016/041683

(56) Entgegenhaltungen:
- EP-A2- 2 511 807
- WO-A1-2008/113542
- WO-A1-2010/112463
- DE-A1-102008 040 755

## Beschreibung

Die vorliegende Erfindung betrifft eine Anzeige- und Bedienvorrichtung, insbesondere für ein Kraftfahrzeug, aufweisend eine Anzeigefläche und ein auf der Anzeigefläche angeordnetes Bedienelement, wobei das Bedienelement zur Erfassung einer Bedienhandlung auf der Anzeigefläche innerhalb eines Bewegungsbereichs bewegbar ist. Die Erfindung betrifft überdies ein Bedienelement für eine Anzeige- und Bedienvorrichtung sowie ein Kraftfahrzeug mit einer Anzeige- und Bedienvorrichtung. WO2010112463 offenbart die Merkmale des Oberbegriffes des Anspruchs 1.

Über einen langen Zeitraum der technischen Entwicklung hinweg waren Anzeigevorrichtungen zur Darstellung von Informationen sowie Bedienelemente zur Beeinflussung der auf den Anzeigeflächen der Anzeigevorrichtungen dargestellten Informationen räumlich getrennt. Eine Verschmelzung haben Anzeigeflächen und Bedienelemente durch die Entwicklung sogenannter Touchscreens, also berührungsempfindlicher Bildschirme, erfahren. Touchscreens kommt in zahlreichen technischen Gebieten eine große Bedeutung zu. Insbesondere werden Touchscreens auch immer häufiger in Kraftfahrzeugen angeboten. Dem Fahrer können mittels eines solchen Touchscreen zahlreiche Bedienmöglichkeiten angeboten werden, wobei die Auswahl und die Darstellung der Bedienmöglichkeiten situationsabhängig verändert werden können. überwiegend kommen heutzutage Touchscreens mit Flüssigkristallanzeige zum Einsatz. Die Messung der Berührung kann mittels resistiver, kapazitiver und / oder induktiver Verfahren erfolgen.

US 2014/0098998 A1 offenbart eine Anzeigevorrichtung für ein Kraftfahrzeug, bei dem die Anzeige mittels einer Rückprojektionsvorrichtung erzeugt wird. Dabei erzeugt eine Projektionsvorrichtung ein Bild auf der Rückseite einer teilweise transparenten Projektionsfläche. Einem Fahrzeugnutzer ist die Vorderseite der Projektionsfläche zugewandt, auf der er das projizierte Bild erkennen kann. Weiterhin umfasst das offenbarte System eine auf die Rückseite der Projektionsfläche gerichtete Infrarotkamera sowie eine Infrarotleuchtdiode zur Beleuchtung der Projektionsfläche. Aufgrund der halbtransparenten Projektionsfläche umfasst das von der Infrarotkamera erfasste Bild Objekte, die sich auf der Vorderseite der Projektionsfläche befinden. Auf diese Weise kann eine Hand oder ein anderes einen Fahrzeugnutzer identifizierendes Objekt erkannt werden. Das System kann somit zur Authentifizierung eines Nutzers verwendet werden.

Eine Weiterbildung des vorbeschriebenen Rückprojektionssystems wurde durch eine öffentliche Vorführung der Firma Texas Instruments auf der Consumer Electronics Show (CES) im Jahr 2013 in Las Vegas, USA, bekannt. Das weitergebildete Rückprojektionssystem kann mit einem oder mehreren Fingern vorgenommene Bedienhandlungen erkennen, wie sie bei den vorab beschriebenen herkömmlichen Touchscreens üblicherweise verwendet werden können. Insbesondere kann das System virtuelle Bedienelemente wie z.B. Schaltflächen auf der Anzeigefläche darstellen und erkennen, wenn die virtuellen Bedienelemente durch einen Finger betätigt werden.

Insbesondere in Kraftfahrzeugen ist es wichtig, dass der Nutzer Bedienhandlungen schnell und auf einfache Weise vornehmen kann, ohne seine Aufmerksamkeit zu lange vom Straßenverkehr abzuwenden. Es ist daher trotz der Verwendung von Touchscreens üblich, physische Bedienelemente für die wichtigsten Bedienhandlungen vorzusehen. Ein Beispiel für ein solches Bedienelement ist ein Drehregler zur Regulierung einer Lautstärke eines Audiosystems des Kraftfahrzeugs. Die Bedienung eines Touchscreens ist häufig durch hierarchisch aufgebaute Menüs vorgegeben. Ein weiteres Beispiel für ein oft vorhandenes physisches Bedienelement ist ein Druckknopf, bei dessen Betätigung der Benutzer von jedem Zustand aus unter Umgehung der Untermenüs der Menühierarchie in ein Hauptmenü zurückkehren kann.

Nachteilig an außerhalb der Anzeigefläche angebrachten physischen Bedienelementen ist, dass der Nutzer Bedienhandlungen außerhalb der ihm durch die Verwendung von Touchscreens vertraut gewordenen kombinierten Anzeige- und Bedienfläche vornehmen muss. Das bereits erwähnte 2013 auf der CES vorgestellte System umfasst zur Behebung dieses Nachteils einen auf der Anzeigefläche angebrachten Drehknopf. Dieser besteht aus einem fest auf der Anzeigefläche angebrachten ringförmigen drehbaren Bedienelement. Auf der Rückseite des Drehknopfs sind optisch detektierbare Markierungen angebracht. Eine Drehung des Bedienelements wird erkannt, indem die Drehung der Markierungen von einer Kamera erfasst wird. Eine Innenfläche des ringförmigen Bedienelements bleibt frei. Auf der Innenfläche ist daher die Anzeigefläche zu sehen. Auf die Innenfläche können somit auf die vorab beschriebene Weise wechselnde Darstellungen projiziert werden. Weiterhin können auf der Innenfläche vorgenommene Bedienhandlungen erfasst werden. Somit kann das Bedienelement als Dreh-Drück-Steller verwendet werden, da es sowohl Druckbedienungen (auf der Innenfläche) als aus Dreh-Bedienungen erlaubt.

Ausgehend vom Stand der Technik stellt sich die Aufgabe, eine Anzeige- und Bedienvorrichtung bereitzustellen, die eine größere Anzahl von Bedienhandlungen erlaubt. Weiter besteht die Aufgabe in der Bereitstellung eines Bedienelements für eine Anzeige- und Bedienvorrichtung sowie eines Kraftfahrzeugs, die jeweils eine größere Anzahl von Bedienhandlungen erlauben.

Die Aufgabe wird gelöst bei einer Anzeige- und Bedienvorrichtung mit den Merkmalen des Anspruchs 1, einem Bedienelement mit den Merkmalen des Anspruchs 7 sowie einem Kraftfahrzeug mit den Merkmalen des Anspruchs 8. Vorteilhafte Ausgestaltungen der Erfindung sind Gegenstände der abhängigen Ansprüche.

Erfindungsgemäß ist das Bedienelement der Anzeige- und Bedienvorrichtung translatorisch auf der Anzeigefläche bewegbar. Mit anderen Worten kann das Bedienelement auf der Anzeigefläche verschoben werden. Indem das Bedienelement translatorisch bewegbar ist, kann es zur Erfassung einer Vielzahl von Bedienhandlungen verwendet werden. Dabei kann das Bedienelement zur Erfassung mehrerer unterschiedlicher Bedienhandlungen verwendet werden. Diejenige Bedienhandlung, zu deren Erfassung das Bedienelement in einem bestimmten Zustand bzw. zu einem bestimmten Zeitpunkt eingerichtet ist, kann dem Nutzer beispielsweise mittels der Anzeigevorrichtung angezeigt werden. Das Bedienelement kann zur Einstellung eines bestimmten Wertes verwendet werden, indem auf der Anzeigefläche eine Werteskala angezeigt wird, entlang derer der Nutzer das Bedienelement bewegen kann. Indem die Skala geändert wird, kann in einem anderen Modus dasselbe Bedienelement zur Einstellung eines anderen Wertes verwendet werden. Beispielsweise kann eine Skala eine vom Nutzer einzustellende Innentemperatur eines Kraftfahrzeugs darstellen und eine andere (in einem anderen Modus bzw. zu einem anderen Zeitpunkt dargestellte) Skala kann eine vom Nutzer einzustellende Helligkeit einer Innenraumbeleuchtung darstellen.

Erfindungswesentlich ist, dass das Bedienelement auf der Anzeigefläche der Anzeige- und Bedienvorrichtung angebracht ist. Somit ist der maximale Bereich, in dem das Bedienelement bewegbar ist, auf die Anzeigefläche begrenzt. Eine translatorische Bewegung kann auf der Anzeigefläche in jeder Richtung möglich sein, so dass das Bedienelement von jedem beliebigen Punkt der Anzeigefläche zu jedem anderen beliebigen Punkt der Anzeigefläche auf jedem beliebigen Weg zwischen den beiden Punkten bewegbar sein kann. Eine beispielhafte Anwendung für ein derart ausgestaltetes Bedienelement ist eine Temperatursteuerung für ein Kraftfahrzeug. Auf der Anzeigefläche kann eine Darstellung einer Draufsicht auf einen Innenraum des Kraftfahrzeugs angezeigt werden. Um die Temperatur in einem bestimmten Bereich des Kraftfahrzeugs zu verändern, kann das Bedienelement an die dem bestimmten Bereich entsprechende Stelle der Anzeigefläche bewegt werden. Anschließend kann die für den bestimmten Bereich vorgesehene Soll-Temperatur eingestellt werden. Die Einstellung kann ebenfalls mit dem erfindungsgemäßen Bedienelement erfolgen, wozu dieses beispielsweise drehbar ausgestaltet sein kann.

Das Bedienelement ist besonders geeignet für eine als Rückprojektionsvorrichtung ausgebildete Anzeigevorrichtung, wobei die Anzeigefläche eine Projektionsfläche der Rückprojektionsvorrichtung ist. Durch die vorab beschriebene Projektionsvorrichtung sowie eine zum Beispiel als Kamerasystem ausgebildete Erkennungseinheit wird eine besonders vielseitige Verwendung des erfindungsgemäßen Bedienelements möglich.

In einer vorteilhaften Weiterbildung der Erfindung weist das Bedienelement auf seiner der Anzeigefläche zugewandten Seite zumindest eine Markierung auf, wobei eine Erkennungseinheit der Anzeige- und Bedienvorrichtung eingerichtet ist, eine Position der zumindest einen Markierung auf der Anzeigefläche zu erkennen. Die Ausgestaltung der Markierung kann von der Wahl der Anzeige- und Bedienvorrichtung abhängig gemacht werden. Ist die Anzeige- und Bedienvorrichtung eine Rückprojektionsvorrichtung, so kann die Markierung eine farbige Markierung einer bestimmten Form umfassen. Die Farbe und die Form der Markierung sollen dabei vorteilhafterweise so gewählt werden, dass die Markierung durch die Erkennungseinheit möglichst zuverlässig erkannt werden kann. Unter dem Begriff Farbe sind dabei alle Eigenschaften zu verstehen, die die Reflexion, Absorption und Brechung elektromagnetischer Wellen beeinflussen. Die Farbe kann so gewählt werden, dass ein möglichst hoher Anteil von der Rückprojektionsvorrichtung ausgestrahlter Lichtleistung reflektiert wird. Die Farbe kann auch so gewählt werden, dass Licht einer bestimmten Wellenlänge reflektiert wird. Die Form kann so gewählt werden, dass eine Verwechslung mit anderen von der Erkennungseinheit erfassten Mustern minimiert wird. Beispielsweise wird eine auf die Anzeigefläche platzierte Fingerspitze vom Kamerasystem der Rückprojektionsvorrichtung als ungefähr kreisförmiges Muster erfasst. Um die Markierung hiervon möglichst gut unterscheidbar zu machen, kann ihre Form rechteckförmig sein. Die Form kann auch komplexer sein. Denkbar ist beispielsweise eine unterbrochene Form, wie sie beispielsweise von mehreren nicht aneinander angrenzenden Vielecken gebildet wird.

Die Markierung kann auch elektrische, insbesondere resistive, induktive und / oder kapazitive Eigenschaften haben. Eine solche Ausgestaltung ist insbesondere dann vorteilhaft, wenn die Anzeige- und Bedienvorrichtung einen Touchscreen umfasst, der mittels resistiver, induktiver und / oder kapazitiver Effekte bedienbar ist.

Anstelle von oder zusätzlich zu Markierungen kann eine Bewegung des Bedienelements auch auf andere Arten erkannt werden. Ein Bedienelement kann beispielsweise über Geschwindigkeitssensoren verfügen, die eine translatorische und / oder eine rotatorische Bewegung (also eine Verschiebung und / oder eine Drehung) erkennen können. Die Information über die erkannte Bewegung kann an nachgeschaltete

Verarbeitungsvorrichtungen übertragen werden, wobei die Information bevorzugt elektrisch übertragen werden kann. Die Information kann drahtlos übertragen werden. Die Information kann auch mittels in der Anzeigefläche integrierter elektrischer Leiterbahnen übertragen werden.

Das Bedienelement kann auf unterschiedliche Arten auf der Anzeigefläche befestigt werden. Beispielsweise, aber nicht beansprucht, kann das Bedienelement magnetische Eigenschaften aufweisen, so dass es aufgrund von Magnetismus auf der Anzeigefläche gehalten wird. Die magnetische Gegenkraft kann durch einen auf der Rückseite der Anzeigefläche angeordneten Gegenmagneten erzeugt werden. Alternativ oder zusätzlich kann auch die Anzeigefläche selbst magnetisch sein. Das Bedienelement kann auch abnehmbar sein. Mit anderen Worten kann es möglich sein, dass ein Nutzer das Bedienelement von der Anzeigefläche nimmt und entfernt. Insbesondere beim Einsatz in Kraftfahrzeugen soll aber die Kraft, mit der das Bedienelement auf der Anzeigefläche haftet (also z.B. die magnetische Anziehungskraft), mindestens so groß gewählt werden, dass das Bedienelement nicht von selber, also ohne Zutun des Nutzers, verschoben werden kann oder von der Anzeigefläche rutschen oder fallen kann. Darüber hinaus soll die Kraft, mit der das Bedienelement auf der Anzeigefläche haftet, höchstens so groß gewählt werden, dass das Bedienelement vom Nutzer mit angemessenem Aufwand bewegt werden kann.

Erfindungsgemäß weist das Bedienelement auf seiner der Anzeigefläche zugewandten Seite zumindest einen Führungsstift auf, wobei die Anzeigefläche und / oder das Bedienelement zumindest eine zur Aufnahme des zumindest einen Führungsstifts eingerichtete Bohrung aufweist oder aufweisen, wobei durch die Form der zumindest einen Bohrung der Bewegungsbereich der translatorischen Bewegung des Bedienelements vorgegeben ist. Der Vorteil dieser Ausgestaltung liegt einerseits darin, dass die möglichen translatorischen Bewegungen des Bedienelements eingeschränkt werden können. Mit anderen Worten können durch die Wahl der Bohrungen in der Anzeigefläche und / oder in dem Bedienelement die translatorischen Bewegungen des Bedienelements vorbestimmt und eingeschränkt werden. Hat beispielsweise eine Bohrung die Form eines horizontalen Striches, so kann das Bedienelement nur entlang dieses Striches auf der Anzeigefläche bewegt werden. Es sind auch komplexere Formen der Bohrungen möglich. Die Bohrung muss allerdings zusammenhängend gewählt werden, so dass das Bedienelement entlang der Bohrung bewegt werden kann. Beispielsweise kann die Bohrung die Form des

Großbuchstabens "H" haben, also aus zwei parallelen vertikalen Bohrungen und einer mittig angeordneten horizontalen Bohrung bestehen. Es ist vorteilhaft, die geringste Ausdehnung der Bohrung nur geringfügig größer zu wählen als den Durchmesser des Führungsstiftes. Hierdurch wird eine stabile Führung des Führungsstiftes bei der Bewegung des Führungsstiftes entlang der Bohrung erzielt. Hat die Bohrung beispielsweise die Form eines horizontalen Striches, so handelt es sich bei der geringsten Ausdehnung um die vertikale Größe der Bohrung.

Da das Bedienelement einen Führungsstift aufweist, wird zudem eine Befestigung des Bedienelements auf der Anzeigefläche ermöglicht. Hierzu kann der der Führungsstift vorteilhafterweise an seinen Enden dicker sein, wobei die Dicke eines dem Bedienelement zugewandten Endes des Führungsstiftes größer als die geringste Ausdehnung einer Bohrung in dem Bedienelement gewählt werden soll und die Dicke eines der Anzeigefläche zugewandten Endes des Führungsstiftes größer als die geringste Ausdehnung einer Bohrung in der Anzeigefläche gewählt werden soll. Indem das dicke Ende des Führungsstiftes hinter der Bohrung liegt, kann der Führungsstift nicht aus der Bohrung herausbewegt werden. Damit kann verhindert werden, dass das Bedienelement von der Anzeigefläche entfernt werden kann. Das Bedienelement ist somit auf einfache Weise auf der Anzeigefläche fixiert und dennoch auf der Anzeigefläche entlang der Bohrung translatorisch bewegbar. Bei einer alternativen Ausgestaltung verfügt der Führungsstift über eine konstante Dicke. Zur Befestigung des Führungsstiftes an dem Bedienelement und / oder auf der Anzeigefläche wird in dem Bedienelement bzw. auf der Rückseite der Anzeigefläche ein Gegenelement lösbar oder unlösbar mit dem jeweiligen Ende des Führungsstiftes verbunden, das den gleichen Zweck erfüllt wie die in der Dicke vergrößerten Enden des Führungsstifts der vorgenannten Ausführungsform.

Um eine translatorische Bewegung des Bedienelements zu ermöglichen ist es nur nötig, dass entweder das Bedienelement oder die Anzeigefläche eine Bohrung aufweist, entlang derer der Führungsstift translatorisch bewegbar ist. Wenn die Anzeigefläche die Bohrung aufweist, so kann das dem Bedienelement zugewandte Ende des Führungsstiftes vorteilhafterweise fest mit dem Bedienelement verbunden werden. Bei einer translatorischen Bewegung des Bedienelements wird dann auch der Führungsstift bewegt. Wenn das Bedienelement die Bohrung aufweist, so kann das der Anzeigefläche zugewandte Ende des Führungsstiftes vorteilhafterweise fest mit der Anzeigefläche verbunden werden. Bei einer translatorischen Bewegung des Bedienelements wird dann der Führungsstift nicht bewegt.

Wird die Bohrung in dem Bedienelement vorgesehen, so hat dies den Vorteil, dass die Bohrung in keiner Position des Bedienelements sichtbar ist, da sie durch das Bedienelement verdeckt ist. Ein weiterer Vorteil liegt darin, dass bei gegebener Form und Größe des Bedienelements ein größerer Bewegungsspielraum ermöglicht wird, bei dem die Bohrung stets von dem Bedienelement bedeckt wird und somit nicht sichtbar ist. Zur Verdeutlichung soll beispielhaft von einem kreisförmigen Bedienelement mit einem Durchmesser von zwei Zentimetern ausgegangen werden. Das Bedienelement soll einen geradenförmigen Bewegungsbereich erhalten. Weist das Bedienelement einen mittig angeordneten Führungsstift auf, der in einer geradenförmigen Bohrung in der Anzeigefläche bewegbar ist, so kann die geradenförmige Bohrung eine Länge von höchstens einem Zentimeter aufweisen, damit die Bohrung in jeder möglichen Stellung des Bedienelements von diesem bedeckt wird. Ist hingegen ein Ende eines Führungsstiftes fest in der Anzeigefläche fixiert und befindet sich eine geradenförmige Bohrung im Bedienelement, so kann die Bohrung eine Länge von höchstens zwei Zentimetern aufweisen. Der Bewegungsspielraum ist dann also doppelt so groß.

Erfindungsgemäß ist das Bedienelement translatorisch im Wesentlichen entlang einer Haupterstreckungsrichtung bewegbar. In diesem Fall hat die Bohrung also eine längliche Form, die sich im Wesentlichen horizontal, vertikal oder in einem anderen Winkel erstrecken kann. Die Bohrung kann eine Gerade sein, sie kann jedoch auch leicht geschwungen sein, beispielsweise wenn dies aus ästhetischen Gründen vorteilhaft ist.

Erfindungsgemäß wird die Länge der Bohrung in der Anzeigefläche, also die Ausdehnung in der Haupterstreckungsrichtung, höchstens so groß gewählt, dass die Bohrung bei jeder möglichen Stellung des Bedienelements von diesem überdeckt wird. Indem das Bedienelement translatorisch im Wesentlichen entlang einer Haupterstreckungsrichtung bewegbar ist, können dem Nutzer trotz der relativ einfachen Ausführung der Erfindung eine Vielzahl von Bedienmöglichkeiten ermöglicht werden.

Die Erfindung kann dahingehend vorteilhaft weitergebildet werden, dass das Bedienelement zur Erfassung einer weiteren Bedienhandlung rotatorisch auf der Anzeigefläche bewegbar ist. Das Bedienelement ist also mit anderen Worten nicht nur translatorisch bewegbar, sondern zusätzlich auch drehbar. Auf diese Weise können dem Nutzer eine Vielzahl zusätzlicher Bedienmöglichkeiten angeboten werden. Mit Drehreglern werden üblicherweise eindimensionale Größen wie beispielsweise eine Temperatur eingestellt. Das derart weitergebildete Bedienelement erlaubt es also beispielsweise bei einer beispielhaften Verwendung in einem Kraftfahrzeug, zunächst mittels einer translatorischen Bewegung denjenigen Bereich einzustellen, dessen Temperatur verändert werden soll, und anschließend mittels einer rotatorischen Bewegung die gewünschte Temperatur einzustellen. Die rotatorische Bedienmöglichkeit ist zusätzlich zur translatorischen Bedienmöglichkeit besonders einfach umzusetzen, wenn das Bedienelement auf seiner der Anzeigefläche zugewandten Seite zumindest eine Markierung aufweist, wobei eine Erkennungseinheit der Anzeige- und Bedienvorrichtung eingerichtet ist, eine Position der zumindest einen Markierung auf der Anzeigefläche zu erkennen. Die Markierung kann dann sowohl zur Erkennung einer translatorischen als auch einer rotatorischen Bewegung genutzt werden.

In einer weiteren vorteilhaften Ausgestaltung verfügt das Bedienelement über über den Bewegungsbereich verteilte Rastpositionen. Eine Rastposition ist dadurch gekennzeichnet, dass die Kraft, die zur Bewegung des Bedienelements aus der Rastposition heraus aufgewendet werden muss, leicht erhöht ist gegenüber der Kraft, die ansonsten zur Bewegung des Bedienelements benötigt wird. Zusätzlich kann eine Rastposition durch ein akustisches Signal wie beispielsweise ein leises Klicken erkennbar sein, das beim Erreichen der Rastposition ertönt. In manchen Ausgestaltungsformen muss ein solches akustisches Signal nicht gesondert erzeugt werden, sondern entsteht ohnehin beim Erreichen jeder Rastposition. Die Rastpositionen können Positionen kennzeichnen, die der Nutzer des Bedienelements bei der Bewegung bevorzugt einstellen möchte. Die Rastpositionen können aber auch dem Zweck dienen, dem Nutzer bei der Bewegung des Bedienelements ein haptisches Gefühl zu vermitteln. Dies ist insbesondere vorteilhaft, wenn der Nutzer bei der Bewegung des Bedienelements nicht dauerhaft seinen Blick auf das Bedienelement richten kann, wie dies beispielsweise in einem Kraftfahrzeug während der Fahrt der Fall sein kann. Die Rastpositionen können entlang des gesamten Bewegungsbereichs oder entlang eines Teilbereiches des gesamten Bewegungsbereichs verteilt sein. Die Rastpositionen können sich entlang des translatorischen Bewegungsbereiches und / oder entlang des rotatorischen Bewegungsbereiches befinden.

Bei einer besonders vorteilhaften Ausführungsform werden bei einem Bedienelement mit Führungsstiften die entlang des translatorischen Bewegungsbereiches verteilten Rastpositionen dadurch gebildet, dass auf der Rückseite der Anzeigefläche Elemente angebracht sind, entlang derer sich der Führungsstift bei einer Bewegung des Bedienelements bewegt. Mit besonderem Vorteil drücken die Elemente mit einer geringen Kraft gegen den Führungsstift. An den Rastpositionen weisen die Elemente Kerben auf, die geeignet sind, den Führungsstift zumindest teilweise aufzunehmen. Die Kerben sollen so geformt sein, dass der Führungsstift bei einer weiteren Bewegung des Bedienelements die Kerbe auch wieder leicht verlassen kann, wobei hierzu eine im Vergleich mit einer Bewegung außerhalb der Ruhepositionen leicht erhöhte Kraft vonnöten sein sollte. Alternativ ist es auch möglich, den Querschnitt der den Führungsstift aufnehmenden Bohrung an Rastpositionen geringfügig zu verringern. Alternativ ist es auch möglich, den Querschnitt der den Führungsstift aufnehmenden Bohrung an Rastpositionen geringfügig zu erhöhen, so dass in der Bohrung Kerben entstehen. Um zu gewährleisten, dass der Führungsstift zumindest teilweise in eine solche Kerbe gelangt, soll der Führungsstift mit einer geringen Kraft gegen die Seite der Bohrung gedrückt werden, auf welcher sich die Kerbe befindet.

Mit weiterem Vorteil ist das Bedienelement ringförmig. Dies ist insbesondere dann vorteilhaft, wenn das Bedienelement auch rotatorisch bewegbar ist, also drehbar ist. Eine besonders vorteilhafte Weiterbildung gelingt dadurch, dass das Bedienelement zumindest zwei aneinander angrenzende oder ineinander greifende konzentrische ringförmige Elemente umfasst. Unter ineinander greifenden konzentrischen ringförmigen Elementen sind dabei insbesondere solche Elemente zu verstehen, bei denen ein erstes ringförmiges Element ein zweites ringförmiges Element derart in sich aufnimmt, dass auf der dem Nutzer des Bedienelements zugewandten Seite nur das erste Element sichtbar ist, während auf der der Anzeigefläche zugewandten Seite des Bedienelements beide Elemente sichtbar sind. Durch diese besonders vorteilhafte Weiterbildung können die Führungsstifte des Bedienelements an den unterschiedlichen ringförmigen Elementen des Bedienelements angebracht werden. In Verbindung mit unterschiedlich ausgestalteten Gegenelementen, die sich auf der Rückseite der Anzeigefläche befinden und mit den Führungsstiften verbindbar sind und / oder durch Kontakt mit den Führungsstiften Rastpositionen bilden, kann das Bedienelement besonders einfach und dennoch vielseitig ausgestaltet werden. Insbesondere können die ringförmigen Elemente bei einer Bewegung des Bedienelements unterschiedlich bewegt werden. Die ringförmigen Elemente können bei einer translatorischen Bewegung gemeinsam bewegt werden, wohingegen bei einer rotatorischen Bewegung nur eines der ringförmigen Elemente bewegt wird, während das andere nicht bewegt wird. Die genannte Ausführungsform wird nachfolgend im Zusammenhang mit der Beschreibung der Figuren noch ausführlicher erläutert.

Die ringförmigen Elemente können in ihrer Gesamtheit eine vollständig gefüllte kreisförmige Oberfläche haben. Das Bedienelement kann dann mit anderen Worten als ein geometrischer Kreiszylinder beschrieben werden. Alternativ kann auch ein Innenbereich des Bedienelements frei bleiben, so dass das Bedienelement als ein geometrischer Hohlzylinder beschrieben werden kann. Dies ist besonders vorteilhaft, weil die frei bleibende Innenfläche zur Anzeige von Informationen genutzt werden kann.

Die Erfindung wird nachfolgend anhand beispielhafter Darstellungen erläutert. Es zeigen
- Fig. 1: eine erfindungsgemäße Anzeige- und Bedienvorrichtung in einer Ausführungsform in zwei verschiedenen Zuständen (a) und (b),
- Fig. 2: ein erfindungsgemäßes Bedienelement in einer Ausführungsform in einer frontalen Vorderansicht,
- Fig. 3: ein erfindungsgemäßes Bedienelement in einer Ausführungsform in einer perspektivischen Vorderansicht,
- Fig. 4: ein erfindungsgemäßes Bedienelement in einer Ausführungsform in einer frontalen Rückansicht,
- Fig. 5: ein Gegenelement,
- Fig. 6: ein Element mit Rastkerben,
- Fig. 7: ein erfindungsgemäßes Bedienelement in einer Ausführungsform mit Führungsstiften und einem Element mit Rastkerben in einer perspektivischen Rückansicht,
- Fig. 8: eine perspektivische Explosionsdarstellung eines erfindungsgemäßen Bedienelements in einer Ausführungsform.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden. Weiterhin ist die Darstellung nicht unbedingt maßstabsgetreu. Einzelne dargestellte Merkmale können zu Zwecken der besseren Veranschaulichung vergrößert oder verkleinert dargestellt sein.

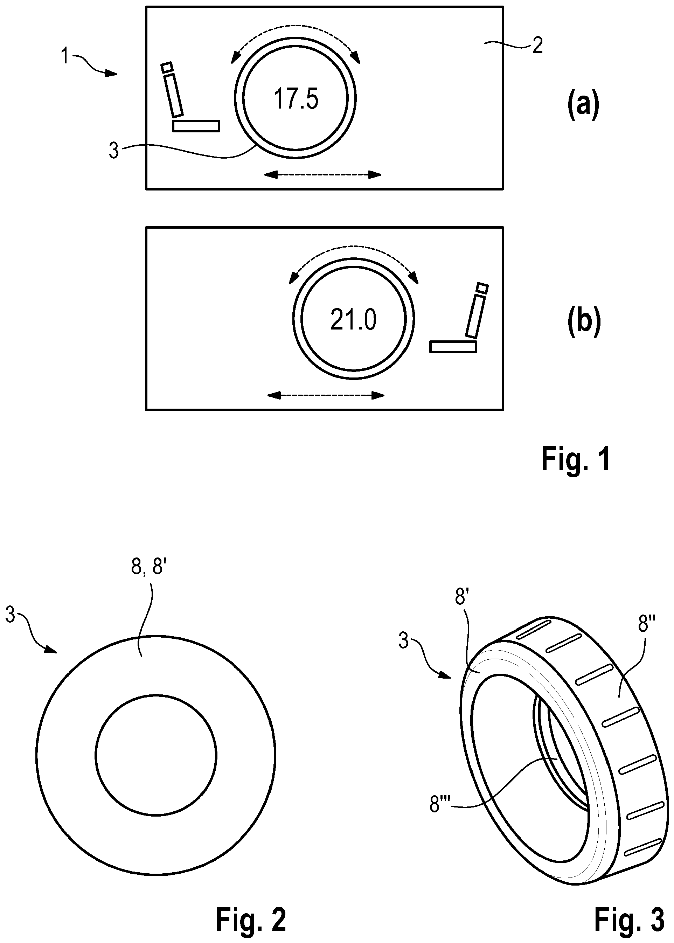

Fig.1 zeigt eine mögliche Ausführungsform einer erfindungsgemäßen Anzeige- und Bedienvorrichtung 1. Es sei darauf hingewiesen, dass eine erfindungsgemäße Anzeige- und Bedienvorrichtung 1 mehr als die in Fig. 1 dargestellten Elemente umfassen kann. Insbesondere kann eine Anzeige- und Bedienvorrichtung 1, die beispielsweise eine Rückprojektionsvorrichtung 1 sein kann, Hardware-Teile umfassen, die hinter der Anzeigefläche 2 oder an anderen Orten platziert sein können. Solche Hardware-Teile sind in Fig. 1 nicht dargestellt, können aber Teile der dargestellten Anzeige- und Bedienvorrichtung sein. Die mit (a) und (b) bezeichneten Teildarstellungen zeigen jeweils eine Anzeige- und Bedienvorrichtung 1 mit einer Anzeigefläche 2 und einem darauf befindlichen Bedienelement 3. Im gezeigten Beispiel dient das Bedienelement zur Einstellung der Innenraumtemperatur eines Kraftfahrzeugs, wobei die Temperatur für die Innenraumbereiche des Fahrers und des Beifahrers getrennt einstellbar sind. Das Bedienelement 3 umfasst einen Drehring 3, welcher rotatorisch bewegbar, also drehbar, ist. Zusätzlich ist der Drehring 3 translatorisch bewegbar, als verschiebbar. Die möglichen Bewegungsarten des Bedienelements 3 sind in Fig. 1 durch gestrichelte Pfeile gekennzeichnet. Die translatorische Bewegung ist entlang einer horizontalen Geraden möglich, wobei eine linke Endposition der translatorischen Bewegung in der oberen Darstellung (a) gezeigt ist und wobei eine rechte Endposition der translatorischen Bewegung in der unteren Darstellung (b) gezeigt ist. Das Bedienelement 3 ist so ausgestaltet, dass es in diesen beiden dargestellten Endpositionen einrastet. Um die Temperatur des Innenraumbereichs des Fahrers einzustellen, muss der Nutzer das Bedienelement 3 zunächst in die linke Endposition bewegen, wo es einrastet (Darstellung (a)). In dieser Position kann der Nutzer die Temperatur durch eine rotatorische Bewegung des Bedienelements 3, also eine Drehung, einstellen. Das Bedienelement 3 ist kreisförmig ausgestaltet, wobei ein innerer Bereich des Bedienelements 3 frei bleibt, so dass in diesem inneren Bereich die sich unter dem Bedienelement 3 befindliche Anzeigefläche 2 sichtbar ist. Die eingestellte Temperatur wird auf der Anzeigefläche 2 in dem inneren Bereich des Bedienelements 3 angezeigt. Um die Temperatur des Innenraumbereichs des Beifahrers einzustellen, muss der Nutzer das Bedienelement 3 zunächst in die rechte Endposition bewegen, wo es einrastet (Darstellung (b)). In dieser Position kann der Nutzer die Temperatur wiederum durch eine Drehung des Bedienelements 3 einstellen.

Fig. 2 zeigt ein erfindungsgemäßes Bedienelement 3 in einer Ausführungsform in einer frontalen Vorderansicht. In dieser Darstellung ist ein äußeres ringförmiges Element 8 des Bedienelements 3 zu erkennen. Dieses 8 umfasst Einzelelemente 8', 8", 8‴, was jedoch in der in Fig. 2 dargestellten Ansicht nicht zu erkennen ist. Dem Betrachter der dargestellten Frontalansicht ist das Einzelelemente 8' zugewandt. Das Bedienelement 3 umfasst weiterhin ein inneres ringförmiges Element 9, welches in der in Fig. 2 gezeigten Ansicht ebenfalls nicht erkennbar ist.

Fig. 3 zeigt ein erfindungsgemäßes Bedienelement 3 in einer Ausführungsform in einer perspektivischen Vorderansicht. In dieser Darstellung sind die Einzelelemente 8', 8", 8‴ des äußeren ringförmigen Elements 8 des Bedienelements 3 zu erkennen. Nicht erkennbar ist wiederum das innere ringförmige Element 9, das ebenfalls Bestandteil des Bedienelements 3 ist. Das äußere ringförmige Element 8 in der gezeigten Ausführungsform besteht aus einem ersten Einzelelement 8', das als dem Nutzer zugewandte Blende des Bedienelements 3 ausgestaltet ist. Aus diesem Grund kann dieses Element 8' aus einem optisch ansprechenden Material wie z.B. Chrom gefertigt sein. Ein zweites Einzelelement 8" bildet einen äußeren Ring des Bedienelements 3, welcher für den Nutzer bei einer translatorischen und / oder rotatorischen Bewegung des Bedienelements 3 eine Hauptangriffsfläche darstellt. Aus diesem Grund kann das Einzelelement 8" beispielsweise aus einem rutschfesten Gummimaterial gefertigt sein. Das Einzelelement 8" kann entlang seines Umfangs quer zur Umfangsrichtung angeordnete Rillen aufweisen, die einer verbesserten Handhabung dienen. Ebenfalls dargestellt ist ein drittes Einzelelement 8‴ des äußeren ringförmigen Elements 8. Dieses Element Einzelelement 8‴ dient zusammen mit den anderen Elementen 8', 8" des äußeren ringförmigen Elements 8 und dem inneren ringförmigen Element 9 der erfindungsgemäßen Ausgestaltung des Bedienelements 3 und wird nachfolgend noch näher erläutert.

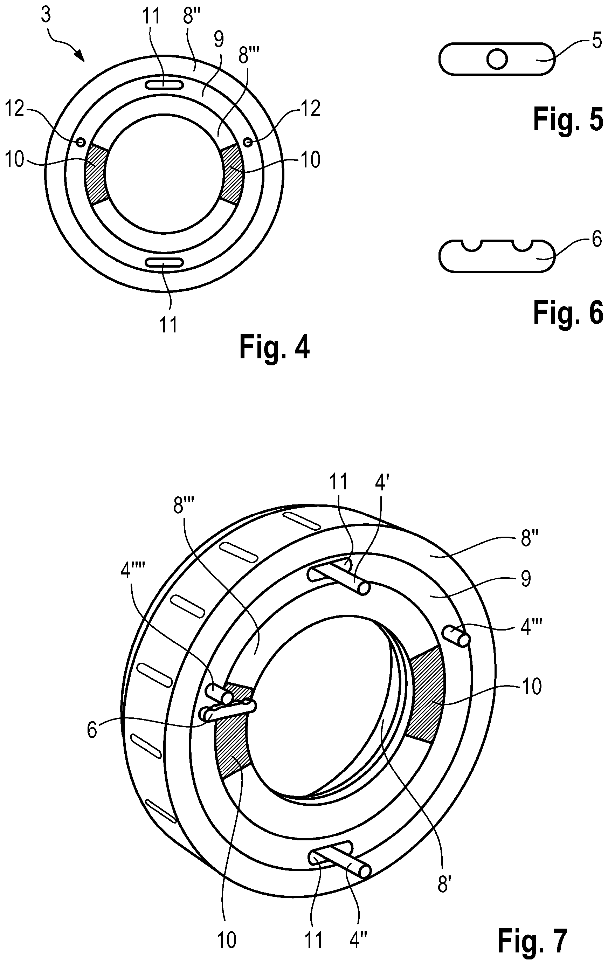

Fig. 4 zeigt ein erfindungsgemäßes Bedienelement in einer Ausführungsform in einer frontalen Rückansicht. Zur besseren Darstellung sind die Führungsstifte und Gegenelemente, die auf der Rückseite des Bedienelements 3 angeordnet sein können, nicht dargestellt. Diese werden im Zusammenhang mit den weiteren Figuren nachfolgend noch gesondert erläutert. Das zweite Einzelelement 8" des äußeren ringförmigen Elements 8 ist in der Rückansicht der Fig. 4 als äußerer Ring zu erkennen. Das dritte Einzelelement 8‴ des äußeren ringförmigen Elements 8 ist in der Rückansicht der Fig. 4 als innerer Ring zu erkennen. Auf diesem Element 8‴ sind einander gegenüberliegend zwei Markierungen 10 angebracht. Diese Markierungen 10 weisen eine besondere Farbe auf. Sie sind daher von einer Erkennungseinheit erkennbar. Eine als Rückprojektionsvorrichtung ausgebildeten Anzeige- und Bedienvorrichtung kann beispielsweise ein Kamerasystem und eine infrarotes Licht emittierende Lichtquelle umfassen. Die Farbe der Markierung 10 kann so gewählt sein, dass infrarotes Licht besonders gut reflektiert wird. Das Kamerasystem muss zur Aufnahme des reflektierten infraroten Lichts geeignet sein. Wird das Bedienelement 3 translatorisch und / oder rotatorisch bewegt, so bewegen sich die Markierungen 10 ebenfalls und reflektieren zu jedem Zeitpunkt das von der Lichtquelle ausgesandte infrarote Licht. Das Kamerasystem nimmt das reflektierte infrarote Licht auf. Eine dem Kamerasystem nachgeschaltete Auswerteeinheit kann dazu eingerichtet sein, die Aufnahme des Kamerasystems auszuwerten und so die vorgenommene Bedienhandlung, also die Bewegung des Bedienelements 3, zu detektieren. Ein inneres ringförmiges Element 9 des Bedienelements 3 ist als zwischen den Elementen 8" und 8‴ liegender Ring zu sehen. Das Element 9 weist zwei kreisförmige Bohrungen 12 auf, welche zur Aufnahme von Führungsstiften dienen. Die Größe einer Bohrung 12 soll so gewählt werden, dass ein darin befindlicher Führungsstift keinen oder wenig Spiel in seitliche Richtungen hat. Die Größe einer Bohrung 12 kann so klein gewählt werden, dass ein Führungsstift darin aufgrund der Haftreibung stabil fixiert ist. In diesem Fall kann darauf verzichtet werden, den Führungsstift im Bedienelement 3 mittels eines vergrößerten Endes des Führungsstiftes oder mittels eines Gegenelements 5 zu fixieren. Das Element 9 weist weiter zwei ebenfalls zur Aufnahme von Führungsstiften dienende längliche Bohrungen 11 auf. Deren Länge, also die in Fig. 4 dargestellte horizontale Ausdehnung, kann den translatorischen Bewegungsspielraum des Bedienelements 3 bestimmen. Der Bewegungsspielraum kann jedoch auch kleiner sein als die Länge der Bohrung 11. Dies ist dann der Fall, wenn die in die Bohrungen 12 eingreifenden Führungsstifte in ihrer translatorischen Bewegung durch Bohrungen in der Anzeigefläche eingeschränkt sind, deren Längen kleiner sind als die Länge der Bohrung 11.

Die Einzelelemente 8', 8", 8‴ des äußeren ringförmigen Elements 8 des Bedienelements 3 sind so miteinander verbunden, dass sich bei einer rotatorischen Bewegung des Bedienelements 3 alle Einzelelemente 8', 8", 8‴ des äußeren ringförmigen Elements 8 miteinander bewegen. Hingegen ist das innere ringförmige Element 9 des Bedienelements 3 rotatorisch nicht bewegbar. Es ist also nicht drehbar und bewegt sich bei einer rotatorischen Bewegung des Bedienelements 3 nicht. Von den Führungsstiften, die das innere ringförmige Element 9 mit der Anzeigefläche 2 verbinden, wird das Element 9 an einer Drehung gehindert. Mit den Einzelelemente 8', 8", 8‴ des äußeren ringförmigen Elements 8 ist das innere ringförmige Element 9 derart verbunden, dass die ringförmigen Elemente 8, 9 rotatorisch gegeneinander bewegbar sind. Bei einer translatorischen Bewegung des Bedienelements 3 werden hingegen die ringförmigen Elemente 8, 9 gemeinsam bewegt.

Fig.5 zeigt ein Gegenelement 5 in einer beispielhaften Ausgestaltung. Das dargestellte Gegenelement 5 kann zur Fixierung der Enden von Führungsstiften verwendet werden. Hierzu wird ein Ende eines Führungsstiftes mit der in Fig. 5 dargestellten mittigen Bohrung des Gegenelements 5 verbunden. Die Verbindung sollte dergestalt beschaffen sein, dass der Führungsstift nicht unbeabsichtigt oder ohne größeren Kraftaufwand wieder von dem Gegenelement 5 getrennt werden kann. Das Gegenelement 5 kann auf der Rückseite einer Anzeigefläche angeordnet sein und dort mit einem Ende eines Führungsstiftes verbunden sein, dessen anderes Ende mit einem Bedienelement 3 verbunden ist. Beispielsweise kann das andere Ende des Führungsstiftes in der in Fig. 4 dargestellten Bohrung 12 stecken. Ein Gegenelement 5 kann außerdem in dem Bedienelement 3 angeordnet werden, um ein dem Bedienelement 3 zugewandtes Ende eines Führungsstiftes zu fixieren. Hierzu muss im Bedienelement 3 ein ausreichend großer Hohlraum vorgesehen werden. Wird ein Gegenelement 5 verwendet, um einen Führungsstab im Bedienelement 3 zu fixieren, der durch eine längliche Bohrung 11 aus dem Bedienelement herausgeführt ist und entlang der Länge der länglichen Bohrung 11 translatorisch bewegbar ist, so muss der Hohlraum in dem Bedienelement 3, in welchem das Gegenelement 5 angeordnet ist, ausreichend groß sein, damit das Gegenelement 5 in ihm bei einer translatorischen Bewegung des Führungsstabes bewegbar ist. Hierzu kann der Hohlraum ebenfalls eine längliche Form aufweisen.

Fig. 6 zeigt ein Element 6 mit Rastkerben. Die Rastkerben bilden über den translatorischen Bewegungsbereich des Bedienelements 3 verteilte Rastpositionen. Das Element 6 kann so angeordnet werden, dass es mit der mit den Rastkerben versehenen Seite mit einer leichten Kraft gegen einen Führungsstab eines Bedienelements 3 gedrückt wird. Wird bei einer translatorischen Bewegung des Bedienelements 3 der Führungsstab zu einer Position einer Rastkerbe bewegt, so gelangt der Führungsstab in die Rastkerbe. Um das Bedienelement 3 aus dieser Position heraus translatorisch zu bewegen, bedarf es eines leicht vergrößerten Kraftaufwandes, um den Führungsstab wieder aus der Rastkerbe heraus zu bewegen. Der Nutzer des Bedienelements 3 kann daher ein Einrasten des Bedienelements 3 haptisch wahrnehmen. Das Element 6 eignet sich zur Anordnung auf einer Rückseite der Anzeigefläche 2 unterhalb und / oder oberhalb einer einen Führungsstift des Bedienelements 3 aufnehmenden Bohrung. Das Element 6 kann dort beispielsweise so angeordnet werden, dass es leicht in die Öffnung der Bohrung hineinragt und somit die Öffnung der Bohrung leicht verengt. Dadurch ist gewährleistet, dass das Element 6 mit einer leichten Kraft gegen einen Führungsstift drückt. Das Element 6 kann aber auch auf andere Weise angeordnet werden und insbesondere mittels einer Druckfeder gegen einen Führungsstab drücken.

Fig. 7 zeigt ein erfindungsgemäßes Bedienelement 3 in einer Ausführungsform mit Führungsstiften 4', 4", 4"', 4"" und einem Element 6 mit Rastkerben in einer perspektivischen Rückansicht. Dargestellt sind die Einzelelemente 8', 8", 8‴ des äußeren ringförmigen Elements 8 sowie das innere ringförmige Element 9 des Bedienelements 3. Weiter sind die im Zusammenhang mit Fig. 4 bereits erläuterten Markierungen 10 des dritten Einzelelements 8‴ sowie die Bohrungen 10, 11 des inneren ringförmigen Elements 9 dargestellt. Die in den länglichen Bohrungen 11 platzierten Führungsstifte 4', 4" sind an ihrem dem Bedienelement 3 zugewandten Ende mit je einem Gegenelement 5 versehen, so dass sie nicht aus der Rückseite des Bedienelements 3 heraus bewegt werden können. Die Gegenelemente 5 der Führungsstifte 4', 4" sind in einem im Inneren des Bedienelements 3 befindlichen Hohlraum angeordnet und daher in der Fig. 7 nicht zu erkennen. Die dem Bedienelement 3 abgewandten Enden der Führungsstifte 4', 4" werden durch eine kreisförmige Bohrung in der in der Fig. 7 nicht dargestellten Anzeigefläche 2 geführt. Diese Enden der Führungsstifte 4', 4" können an der Anzeigefläche 2 entweder befestigt sein, indem die Bohrungen in der Anzeigefläche so klein gewählt werden, dass die Führungsstifte 4', 4" aufgrund der Haftreibung fixiert sind. Alternativ können auf der Rückseite der Anzeigefläche 2 Gegenelemente 5 zur Fixierung der Führungsstifte 4', 4" angeordnet werden. Alternativ können auf der Rückseite der Anzeigefläche 2 die Enden der Führungsstifte 4', 4" vergrößert sein, so dass die Enden der Führungsstifte 4', 4" nicht durch die Bohrungen der Anzeigefläche 2 gelangen können. In den kreisförmigen Bohrungen 12 des Bedienelements 3 sind weitere Führungsstifte 4‴, 4"" angeordnet. Diese Führungsstifte 4"', 4"" greifen mit ihren dem Bedienelement 3 abgewandten Enden in (nicht dargestellte) längliche Bohrungen in der Anzeigefläche 2 ein. Die Führungsstifte 4‴, 4"" können auf der Rückseite der Anzeigefläche 2 mit Gegenelementen 5 fixiert sein. Dies ist aber nicht zwingend, da das Bedienelement 3 mittels der Führungsstifte 4', 4" auf der Anzeigefläche fixiert ist. Die Bohrungen in der Anzeigefläche 2, in die die Führungsstifte 4‴, 4"" eingreifen, sollten in Länge und Ausrichtung mit den Bohrungen 11 des inneren ringförmigen Elements 9 des Bedienelements 3 übereinstimmen, so dass diese Bohrungen gemeinsam den translatorischen Bewegungsbereich des Bedienelements 3 bestimmen. Gegen das Ende des Führungsstifts 4"" drückt von unten ein auf der Rückseite der nicht dargestellten Anzeigefläche 2 angeordnetes Element 6 mit Rastkerben. In der in Fig. 7 dargestellten Ausführungsform ist für den Führungsstifts 4‴ kein gleichartiges Element 6 vorgesehen. Dieses 6 könnte jedoch gemäß einer etwas aufwändigeren Ausgestaltung vorgesehen werden, um den für den Nutzer spürbaren Effekt des Einrastens des Bedienelements 3 noch zu verstärken.

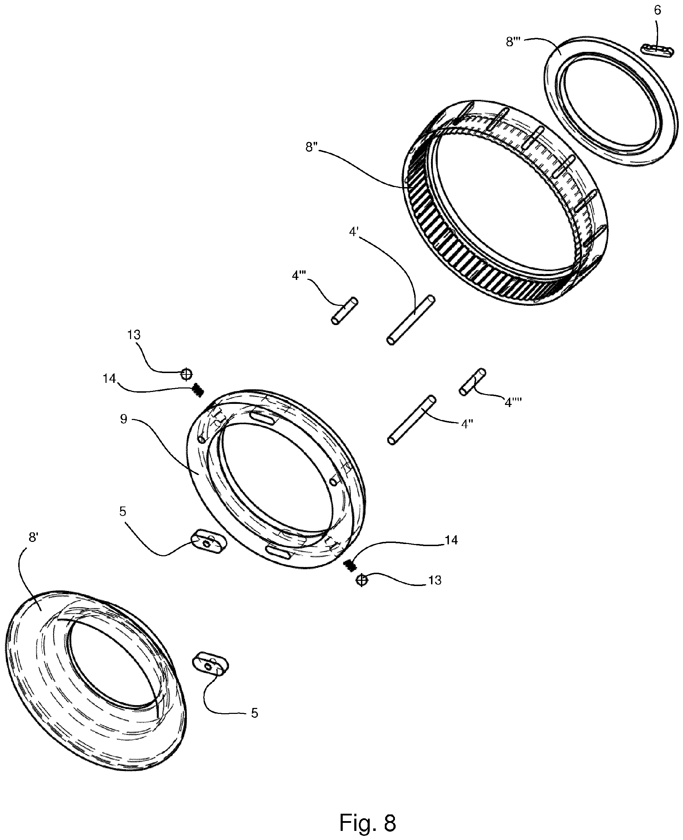

Fig. 8 zeigt eine perspektivische Explosionsdarstellung eines erfindungsgemäßen Bedienelements 3 in einer Ausführungsform. Es wird darauf hingewiesen, dass der dargestellte Aufbau nur beispielhaft zu verstehen ist. Ein Bedienelement kann im Rahmen der vorliegenden Offenbarung und des vorliegenden Schutzbereichs auf viele unterschiedliche Arten ausgestaltet werden. Die in den Figuren gezeigten Ausführungsformen dürfen daher nicht beschränkend verstanden werden. Zur Vermeidung von Wiederholungen soll auf eine erneute Erklärung der vorstehend bereits beschriebenen Elemente verzichtet werden. In Fig. 8 ist zu erkennen, dass den Führungsstiften 4', 4" Gegenelemente 5 zugeordnet sind. In zusammengesetztem Zustand des dargestellten Bedienelements 3 liegen diese 5 an der dem Betrachter zugewandten Seite des inneren ringförmigen Elements 9 an. Der Hohlraum, in dem sich die Elemente 5 bei einer translatorischen Bewegung des Bedienelements 3 bewegen, wird durch das Element 9 einerseits und das erste Einzelelemente 8' des äußeren ringförmigen Elements 8 des Bedienelements 3 andererseits gebildet, das hierzu eine ausreichende Tiefe aufweist. Das ringförmige Element 9 weist weiterhin zylindrische Hohlräume auf, die zur Aufnahme von Federn 14 eingerichtet sind. An den Enden der Federn 14 werden Kugeln 13 angeordnet. Das Einzelelement 8" weist auf seiner Innenseite entlang seines Umfangs Rillen auf. In zusammengesetztem Zustand des Bedienelements 3 drücken die Federn 14 die Kugeln 13 gegen die Innenseite des das Element 9 umgebende Einzelelement 8". Bei einer rotatorischen Bewegung werden die Kugeln 13 dabei über die Rillen und in die Rillen geführt, die somit für die Kugeln 13 Rastpositionen bilden. Hierdurch wird auch bei einer rotatorischen Bewegung ein für den Nutzer spürbarer haptischer Effekt erzielt.

### Bezugszeichenliste

- 1: Anzeige- und Bedienvorrichtung
- 2: Anzeigefläche
- 3: Bedienelement
- 4', 4", 4‴, 4"": Führungsstifte
- 5: Gegenelement
- 6: Element mit Rastkerben
- 7: Rastkerbe
- 8: Äußeres ringförmiges Element des Bedienelements
- 8', 8", 8‴: Einzelelemente des äußeren ringförmigen Elements des Bedienelements
- 9: Inneres ringförmiges Element des Bedienelements
- 10: Markierung
- 11: Bohrung
- 12: Bohrung
- 13: Kugelelement
- 14: Feder

## Patentansprüche

1. Anzeige- und Bedienvorrichtung (1), insbesondere für ein Kraftfahrzeug, aufweisend eine Anzeigefläche (2) und ein auf der Anzeigefläche (2) angeordnetes Bedienelement (3), wobei das Bedienelement (3) zur Erfassung einer Bedienhandlung auf der Anzeigefläche (2) translatorisch innerhalb eines Bewegungsbereichs bewegbar ist, wobei das Bedienelement (3) auf seiner der Anzeigefläche (2) zugewandten Seite zumindest einen Führungsstift (4', 4", 4‴, 4"") aufweist, wobei die Anzeigefläche (2) und / oder das Bedienelement (3) zumindest eine zur Aufnahme des zumindest einen Führungsstifts (4', 4", 4‴, 4"") eingerichtete Bohrung (11) aufweist oder aufweisen, wobei durch die Form der zumindest einen Bohrung (11) der Bewegungsbereich der translatorischen Bewegung des Bedienelements (3) vorgegeben ist, wobei das Bedienelement (3) translatorisch im Wesentlichen entlang einer Haupterstreckungsrichtung bewegbar ist, **dadurch gekennzeichnet, dass** eine Ausdehnung der Bohrung (11) in der Haupterstreckungsrichtung höchstens so groß ist, dass die Bohrung (11) bei jeder möglichen Stellung des Bedienelements (3) von dem Bedienelement (3) überdeckt wird.

2. Anzeige- und Bedienvorrichtung (1) nach Anspruch 1, **dadurch gekennzeichnet, dass** das Bedienelement (3) auf seiner der Anzeigefläche (2) zugewandten Seite zumindest eine Markierung (10) aufweist, wobei eine Erkennungseinheit der Anzeige- und Bedienvorrichtung (1) eingerichtet ist, eine Position der zumindest einen Markierung (10) auf der Anzeigefläche (2) zu erkennen.

3. Anzeige- und Bedienvorrichtung (1) nach einem der vorhergehenden Ansprüche, **dadurch gekennzeichnet, dass** das Bedienelement (3) zur Erfassung einer weiteren Bedienhandlung rotatorisch auf der Anzeigefläche (2) bewegbar ist.

4. Anzeige- und Bedienvorrichtung (1) nach einem der vorhergehenden Ansprüche, **dadurch gekennzeichnet, dass** das Bedienelement (3) über über den Bewegungsbereich verteilte Rastpositionen verfügt.

5. Anzeige- und Bedienvorrichtung (1) nach einem der vorhergehenden Ansprüche, **dadurch gekennzeichnet, dass** das Bedienelement (3) ringförmig ist.

6. Anzeige- und Bedienvorrichtung (1) nach Anspruch 5, **dadurch gekennzeichnet, dass** das Bedienelement (3) zumindest zwei aneinander angrenzende oder ineinander greifende konzentrische ringförmige Elemente (8, 9) umfasst.

7. Bedienelement (3) für eine Anzeige- und Bedienvorrichtung (1) nach einem der Ansprüche 1 bis 6.

8. Kraftfahrzeug mit einer Anzeige- und Bedienvorrichtung (1) nach einem der Ansprüche 1 bis 6.

## Claims

1. Display and operating device (1), in particular for a motor vehicle, having a display surface (2) and an operating element (3) disposed on the display surface (2), wherein the operating element (3) for detecting an operating action on the display surface (2) is movable in a translatory manner within a range of movement; wherein the operating element (3) on that side thereof that faces the display surface (2) has at least one guide pin (4', 4", 4‴, 4""); wherein the display surface (2) and/or the operating element (3) have/has at least one bore (11) which is specified for receiving the at least one guide pin (4', 4", 4‴, 4""); wherein the range of movement of the translatory movement of the operating element (3) is defined by the shape of the at least one bore (11); wherein the operating element (3) is able to be moved in a translatory manner substantially along a direction of main extent, **characterized in that** an extent of the bore (11) in the direction of main extent is at most so large that the bore (11) in each possible position of the operating element (3) is obscured by the operating element (3).

2. Display and operating device (1) according to Claim 1, **characterized in that** the operating element (3) on that side thereof that faces the display surface (2) has at least one marking (10), wherein an identification unit of the display and operating device (1) is specified to identify a position of the at least one marking (10) of the display surface (2) .

3. Display and operating device (1) according to one of the preceding claims, **characterized in that** the operating element (3) for detecting a further operating action is movable in a rotational manner on the display surface (2).

4. Display and operating device (1) according to one of the preceding claims, **characterized in that** the operating element (3) has latching positions distributed across the range of movement.

5. Display and operating device (1) according to one of the preceding claims, **characterized in that** the operating element (3) is annular.

6. Display and operating device (1) according to Claim 5, **characterized in that** the operating element (3) has at least two mutually contiguous or mutually engaging concentric annular elements (8, 9).

7. Operating element (3) for a display and operating device (1) according to one of Claims 1 to 6.

8. Motor vehicle having a display and operating device (1) according to one of Claims 1 to 6.

## Revendications

1. Dispositif d'affichage et de commande (1), en particulier pour un véhicule automobile, présentant une surface d'affichage (2) et un élément de commande (3) disposé sur la surface d'affichage (2), dans lequel l'élément de commande (3) peut être déplacé en translation à l'intérieur d'une zone de déplacement pour détecter une action de commande sur la surface d'affichage (2), dans lequel l'élément de commande (3) présente sur son côté tourné vers la surface d'affichage (2) au moins un goujon de guidage (4', 4", 4"', 4""), dans lequel la surface d'affichage (2) et/ou l'élément de commande (3) présente(nt) au moins un alésage (11) agencé pour recevoir ledit au moins un goujon de guidage (4', 4", 4"', 4""), dans lequel la forme dudit au moins un alésage (11) spécifie la zone de déplacement du déplacement en translation de l'élément de commande (3), dans lequel l'élément de commande (3) peut être déplacé en translation, substantiellement le long d'une direction d'étendue principale,
**caractérisé en ce qu'**une dimension de l'alésage (11) dans la direction d'étendue principale est au plus si grande que l'alésage (11) soit recouvert par l'élément de commande (3) dans toute position possible de l'élément de commande (3).

2. Dispositif d'affichage et de commande (1) selon la revendication 1, **caractérisé en ce que** l'élément de commande (3) présente sur son côté tourné vers la surface d'affichage (2) au moins un marquage (10), dans lequel une unité de reconnaissance du dispositif d'affichage et de commande (1) est conçue pour reconnaître une position du au moins un marquage (10) sur la surface d'affichage (2).

3. Dispositif d'affichage et de commande (1) selon l'une quelconque des revendications précédentes, **caractérisé en ce que** l'élément de commande (3) peut être déplacé en rotation sur la surface d'affichage (2) pour détecter une autre action de commande.

4. Dispositif d'affichage et de commande (1) selon l'une quelconque des revendications précédentes, **caractérisé en ce que** l'élément de commande (3) dispose de positions d'arrêt réparties sur la zone de déplacement.

5. Dispositif d'affichage et de commande (1) selon l'une quelconque des revendications précédentes, **caractérisé en ce que** l'élément de commande (3) est annulaire.

6. Dispositif d'affichage et de commande (1) selon la revendication 5, **caractérisé en ce que** l'élément de commande (3) comprend au moins deux éléments annulaires (8, 9) concentriques adjacents l'un à l'autre ou en prise l'un dans l'autre.

7. Elément de commande (3), destiné à un dispositif d'affichage et de commande (1) selon l'une quelconque des revendications 1 à 6.

8. Véhicule automobile, comprenant un dispositif d'affichage et de commande (1) selon l'une quelconque des revendications 1 à 6.
